# EUROPÄISCHE PATENTANMELDUNG

(11) **EP 1 004 488 A2**
(43) Veröffentlichungstag der Anmeldung: **31.05.2000**
(21) Anmeldenummer: 99118352.6
(22) Anmeldetag: 16.09.1999
(51) Int. Cl.: B60S 1/34, B60S 1/52

(54) **Wischarm**

(30) Priorität: 25.11.1998 DE 19854309
(71) Anmelder: ROBERT BOSCH GMBH, 70442 Stuttgart (DE)
(72) Erfinder: Vlayen, Paul, 3300 Tienen (BE); Vandersmissen, Didier, 3450 Geetsbets (BE); Goossens, Paul, 3290 Schaffen (BE); Daenen, Roger, 3770 Vlytingen-Riemst (BE)

(57) **Zusammenfassung**

Die Erfindung geht aus von einem Wischarm (10) mit einem auf einer Antriebsachse angeordneten Befestigungsteil (12), das mit einem Gelenkteil (14) gelenkig verbunden ist, an das sich starr eine Wischstange (16) anschließt, die über ein Bügelteil (18) gelenkig mit einem Wischblatt verbunden ist und mit einer Spritzwasservorrichtung (20), die teilweise in der Wischstange (16) integriert ist.

Es wird vorgeschlagen, daß die Wischstange (16) im Bereich der Verbindung mit dem Gelenkteil (14) ein Rohrprofil aufweist, durch das eine Wasserleitung (22) führbar ist.

## Beschreibung

### Stand der Technik

Die Erfindung geht von einem Wischarm gemäß den Merkmalen des Oberbegriffs des Patentanspruchs 1 aus.

Bekannte Scheibenwischer besitzen einen Wischarm, der aus einem auf einer Antriebsachse befestigten Befestigungsteil, einem mit diesem über ein Kniegelenk verbundenes Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltene Wischleiste aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit der Wischleiste über eine Kraftfahrzeugscheibe, wobei das Gelenkteil und das Tragbügelsystem es ermöglichen, daß sich die Wischleiste einer Wölbung der Kraftfahrzeugscheibe anpaßt. Ein erforderlicher Anpreßdruck der Wischleiste auf der Kraftfahrzeugscheibe wird mit mindestens einer Zugfeder erreicht, die das Befestigungsteil und das Gelenkteil gemeinsam mit der Wischstange über das Kniegelenk verspannt.

Die Form der einzelnen Bauteile des Wischarms wird durch unterschiedliche Anforderungen und Belastungen beeinflußt, und zwar sollten sie möglichst torsionssteif, biegesteif und im Sichtfeld schmal ausgeführt sein, damit das Wischblatt schwingungsfrei und kontrolliert über die Kraftfahrzeugscheibe geführt werden kann und dabei im Sichtfeld wenig stört.

Das Befestigungsteil überträgt das Antriebsmoment von der Antriebsachse über das Gelenkteil und über die Wischstange auf das Wischblatt. Ferner bildet es einen Teil des Kniegelenks, über das das Befestigungsteil mit dem Gelenkteil mit der Zugfeder verspannt und in Richtung Kraftfahrzeugscheibe gedrückt wird. Im Befestigungsteil entstehen die größten Kräfte bzw. Momente parallel zur Kraftfahrzeugscheibe und auch große Kräfte bzw. Momente senkrecht zur Kraftfahrzeugscheibe. Ferner wirken sich Verformungen im unteren Bereich des Scheibenwischers besonders stark über die gesamte Länge aus und können durch einen Federeffekt zu ungleichmäßigen Wischgeschwindigkeiten führen. Das Befestigungsteil und der erste Teil des Gelenkteils müssen daher besonders biege- und torsionssteif ausgeführt werden.

Der zweite Teil des Gelenkteils ragt meist teilweise und die Wischstange vollständig ins Sichtfeld bei einer Wischbewegung, wodurch sie nicht nur torsions- und biegesteif sondern auch besonders schmal ausgeführt sein müssen, damit sie im Sichtfeld möglichst wenig stören.

Daneben sollte der Wischarm so geformt sein, daß er durch den Fahrtwind nicht von der Kraftfahrzeugscheibe abgehoben wird.

Bekannte Wischarme besitzen ein breites Befestigungsteil und ein aus Blech geformtes Gelenkteil, das im Bereich des Befestigungsteils, d.h. am unteren Rand des Sichtfelds, noch relativ breit ausgeführt ist, häufig mit einem U-Profil. Dadurch ist es in diesem Bereich besonders torsions- und biegesteif und es kann die Zugfeder verdeckt im U-Profil aufgenommen werden. In Richtung zum freien Ende bzw. zur Verbindungsstelle mit der Wischstange verjüngt sich das Gelenkteil, damit es im Sichtfeld schmal ausgeführt ist. Das Profil besitzt über die gesamte Länge des Gelenkteils eine durch das verwendete Blech bestimmte gleichbleibende Materialstärke, die auf die größte zu erwartende Materialbelastung ausgelegt ist, die sich im wesentlichen aus Biege- und Torsionsspannungen zusammensetzt, und zwar senkrecht und parallel zur Kraftfahrzeugscheibe.

Die Wischstange wird in der Regel durch ein Stangenprofil mit konstanter Materialstärke gebildet, das mit dem Gelenkteil verkrimpt ist.

Bei bekannten Scheibenreinigungsanlagen sind auf der Fahrzeughaube Spritzdüsen angeordnet, mit denen die Windschutzscheibe mit Spritzwasser für den Wischvorgang befeuchtet und/oder deren Reinigung mit entsprechenden Reinigungsmitteln unterstützt werden kann. Der Auftreffwinkel des Spritzwassers und der Bereich auf der Windschutzscheibe, auf den das Spritzwasser auftrifft verändert sich mit der Fahrgeschwindigkeit durch einen unterschiedlich starken Fahrtwind.

Um Spritzwasser möglichst effektiv bei unterschiedlichen Geschwindigkeiten aufzubringen und um Spritzdüsen auf der Fahrzeughaube vermeiden zu können, wurde bereits vorgeschlagen, Wasserleitungen und Spritzdüsen am Wischarm anzubringen. Bei Nutzfahrzeugen und bei Bussen ist es bekannt, für die Wischstange ein Rohr zu verwenden. Die Wischstange ist über eine Nietverbindung mit dem Gelenkteil und über eine Nietverbindung mit einem Bügelteil verbunden, in das das Wischblatt eingehängt ist. Hierfür wird die Wischstange an den Verbindungsstellen flach gedrückt, mit Bohrungen für die Nieten versehen, im Gelenkteil bzw. im Bügelteil positioniert und vernietet. Eine Halterung für die Zugfeder am Gelenkteil wird gewöhnlich von einem Rohr gebildet, das teilweise von der dem Gelenkteil zugewandten Stirnseite in die Wischstange mit einer Passung eingeschoben wird, bevor die Wischstange mit dem Gelenkteil verbunden ist. Das Rohr wird gemeinsam mit der Wischstange flach gedrückt und mit Bohrungen für die Nieten und mit einer Bohrung für eine Befestigungsöffnung versehen. Um die Wasserleitungen möglichst verdeckt unterzubringen, ist in Richtung Wischblatt nach der Verbindungsstelle zwischen dem Gelenkteil und der Wischstange eine erste Öffnung und vor der Verbindungsstelle zwischen der Wischstange und dem Bügelteil eine zweite Öffnung in die Wischstange eingefräst. Die Wasserleitung ist von der ersten Öffnung durch die Wischstange und durch die zweite Öffnung zu Spritzdüsen geführt. Die in die Wischstange gefrästen Öffnungen und die Bohrungen für die Nieten erfordern mehrere Fertigungsschritte und schwächen das Profil der Wischstange.

### Vorteile der Erfindung

Nach der Erfindung besitzt der Wischarm eine Wischstange, die im Bereich der Verbindung mit einem Gelenkteil ein Rohrprofil aufweist, durch das eine Wasserleitung für eine Spritzwasservorrichtung führbar ist. Die Wasserleitung kann verdeckt in die Wischstange geführt werden, ohne eine zusätzliche Windangriffsfläche zu bilden. Eine zusätzliche Öffnung für die Wasserleitung und eine dadurch bedingte Schwächung der Wischstange kann vermieden und Fertigungsschritte und Umrüstzeiten können eingespart werden. Hierfür wird die Wasserleitung vorzugsweise an der dem Gelenkteil zugewandten Stirnseite der Wischstange zugeführt.

Die Wischstange ist vorzugsweise mit dem Gelenkteil verkrimpt. Hierfür wird die Wischstange in ein U-förmiges Profil des Gelenkteils geschoben, das zusammengepreßt wird bis eine kraft- und/oder formschlüssige Verbindung zwischen der Wischstange und dem Gelenkteil erreicht ist, ohne daß das rohrförmige Profil der Wischstange vollständig verloren geht. Verkrimpen von Bauteilen ist eine ausgereifte, kostengünstige Technik, bei der Wärmespannungen und Schwächungen durch Bohrungen vermieden werden. Um neben einem Kraftschluß einen guten Formschluß zu erreichen, sind vorzugsweise im Bereich der Verbindung am Umfang der Wischstange und/oder am Gelenkteil Ausnehmungen eingebracht, in die Material des Gelenkteils bzw. der Wischstange fließt, wenn diese verbunden werden.

In einer weiteren Ausgestaltung der Erfindung wird vorgeschlagen, daß die Wischstange im Verbindungsbereich mit dem Bügelteil ein Rohrprofil aufweist. Das Spritzwasser kann in und/oder durch das Bügelteil verdeckt durch die Wischstange vorzugsweise zu einem auf die Wischstange aufgesteckten Kopf mit Spritzdüsen geleitet werden, ohne zusätzliche Bohrungen in der Wischstange und Übergänge vorzusehen. Das Bügelteil und die Wischstange sind vorzugsweise miteinander verkrimpt. Grundsätzlich können die Verbindungen zwischen der Wischstange und dem Gelenkteil und zwischen der Wischstange und dem Bügelteil durch einen sonstigen dem Fachmann geläufigen Kraftschluß, Formschluß und/oder Stoffschluß unterstützt oder ersetzt werden, wie beispielsweise durch Schweißen, Kleben, Klemmen usw.

In einer weiteren Ausgestaltung der Erfindung wird die Wischstange und die Wasserleitung einstückig ausgeführt. Zusätzliche Bauteile und Montageschritte können eingespart werden, beispielsweise das Einführen eines Wasserschlauchs in die Wischstange. Hierfür sollte möglichst eine korrosionsbeständige Wischstange verwendet werden. Die erfindungsgemäße Lösung kann bei sämtlichen Wischarmen für Kraftfahrzeuge verwendet werden, besonders vorteilhaft wird sie jedoch bei langen Wischarmen für Nutzkraftfahrzeuge eingesetzt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischarm von unten,
- Fig. 2: einen vergrößerten Ausschnitt II in Fig. 1,
- Fig. 3: einen Schnitt entlang der Linie III-III in Fig. 1,
- Fig. 4: einen vergrößerten Ausschnitt IV in Fig. 3,
- Fig. 5: einen vergrößerten Ausschnitt V in Fig. 3 und
- Fig. 6: einen Schnitt entlang der Linie VI-VI in Fig. 3.

### Beschreibung des Ausführungsbeispiels

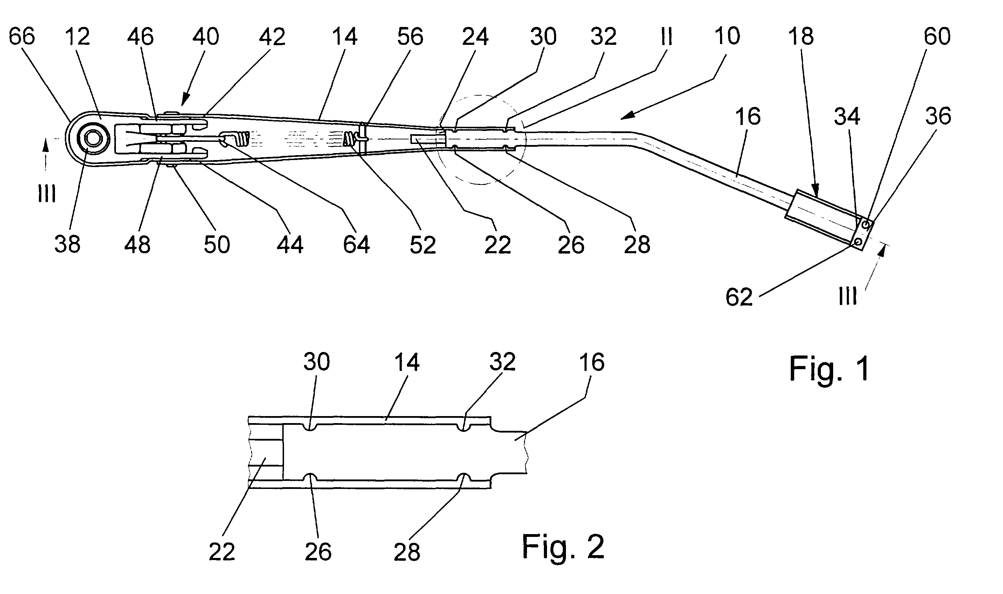

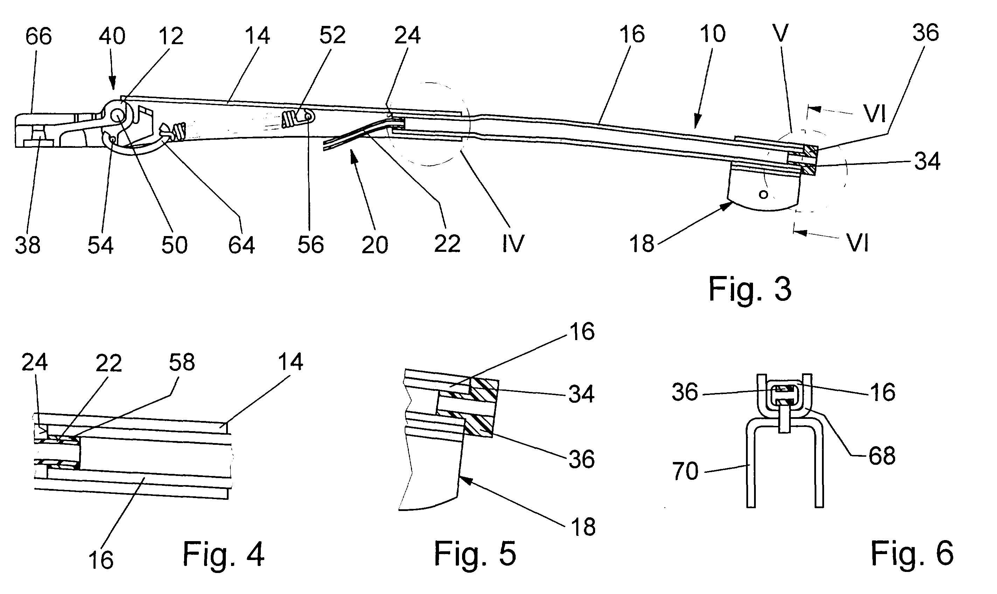

Fig. 1 zeigt einen Wischarm 10 eines Nutzfahrzeugs, der aus einem Befestigungsteil 12 und einem Gelenkteil 14 mit einer Wischstange 16 aufgebaut ist. An dem Wischarm 10 ist ein nicht näher dargestelltes Wischblatt an einem Bügelteil 18 der Wischstange 16 angelenkt. Das Befestigungsteil 12 ist von eine Kunststoffkappe 66 umgeben und besitzt an einem Ende eine Lagerstelle 38, an der es an einer Antriebswelle eines nicht näher dargestellten Wischerantriebs befestigt ist. An seinem anderen Ende bildet es mit dem Gelenkteil 14 ein Gelenk 40, indem Seitenwände 42 und 44 des Gelenkteils 14 im Bereich des Gelenks 40 Seitenwände 46 und 48 des Befestigungsteils 12 überdecken und über einen Gelenkbolzen 50 um eine Gelenkachse schwenkbar verbunden sind. Eine Zugfeder 52, die über einen Bügel 64 an einem ersten Querstift 54 am Befestigungsteil 12 eingehängt ist (Fig. 3) und mit ihrem anderen Ende an einem zweiten Querstift 56 des Gelenkteils 14 angreift, hält das Gelenk 40 in einer abgewinkelten Stellung und erzeugt somit eine Anpreßkraft des Wischblatts an eine Fahrzeugscheibe. Aus dem Stand der Technik ist bekannt, ein Rohr mit einer Passung in die Wischstange einzuführen, dies gemeinsam mit der Wischstange flach zu drücken und anschließend in das flachgedrückte Rohr eine Bohrung für die Zugfeder 52 einzubringen. Der Querstift 56 hat den Vorteil, daß eine Passung vermieden wird. Ferner ist der Querstift 56 ein kostengünstiges Bauteil, das einfach zu fertigen und zu montieren ist.

Das Gelenkteil 14 ist mit der Wischstange 16 verkrimpt. Hierfür wird die Wischstange im Bereich der Verbindung leicht abgeflacht, mit Ausnehmungen 26, 28, 30, 32 versehen und in ein u-förmiges Profil des Gelenkteils 14 gelegt (Fig. 2). Anschließend wird das Gelenkteil 14 zusammengedrückt, bis ein Kraftschluß und ein Formschluß zwischen den Bauteilen erreicht ist, indem Material des Gelenkteils 14 in die Ausnehmungen 26, 28, 30, 32 fließt. An der dem Wischblatt zugewandten Seite 34 ist das Bügelteil 18 an der Wischstange 16 befestigt. Das Bügelteil 18 besitzt zwei miteinander fest verbundene U-Profile 68, 70, und zwar ein erstes in Richtung Wischstange 16 geöffnetes und ein zweites in Richtung Wischblatt geöffnetes U-Profil 70 (Fig. 6). Das Bügelteil 18 ist mit dem ersten U-Profil 68 mit der Wischstange 16 verkrimpt. In das zweite U-Profil 70 wird das Wischblatt eingehängt. Die Wischstange 16 wird im Bereich der Verbindung mit dem Gelenkteil 14 und mit dem Bügelteil 18 nur so weit zusammengedrückt, daß die Wischstange 16 ein Rohrprofil beibehält.

Die Wischstange 16 besitzt ein durchgehendes Rohrprofil, bis zu einem auf der an der dem Wischblatt zugewandten Stirnseite 34 der Wischstange 16 aufgesteckten Kunststoffkopf 36 mit Spritzdüsen 60, 62 (Fig. 5). Vorzugsweise wird als Wischstange 16 ein kostengünstiges Standardrohr mit einem runden Querschnitt verwendet, möglich sind jedoch auch andere Rohrformen, wie beispielsweise mit einem rechteckigen Querschnitt usw.

An einer dem Gelenkteil 14 zugewandten Stirnseite 24 ist eine Wasserleitung 22 einer nicht vollständig dargestellten Spritzwasservorrichtung 20 über einen Deckel 58 angeschlossen (Fig. 4). Die Wischstange 16 dient als Wasserleitung, wodurch eine zusätzliche Leitung und deren Montage im inneren der Wischstange 16 bis zum Kopf 36 eingespart wird. Es kann jedoch auch eine Wasserleitung durch die Wischstange geführt und an einem Kopf mit Spritzdüsen angeschlossen werden. Dabei kann vorteilhaft auf einen Korrosionsschutz im Inneren der Wischstange verzichtet werden.

### Bezugszeichen

- 10: Wischarm
- 12: Befestigungsteil
- 14: Gelenkteil
- 16: Wischstange
- 18: Bügelteil
- 20: Spritzwasservorrichtung
- 22: Wasserleitung
- 24: Stirnseite
- 26: Ausnehmung
- 28: Ausnehmung
- 30: Ausnehmung
- 32: Ausnehmung
- 34: Stirnseite
- 36: Kopf
- 38: Lagerstelle
- 40: Gelenk
- 42: Seitenwand
- 44: Seitenwand
- 46: Seitenwand
- 48: Seitenwand
- 50: Gelenkbolzen
- 52: Zugfeder
- 54: Querstift
- 56: Querstift
- 58: Deckel
- 60: Spritzdüse
- 62: Spritzdüse
- 64: Bügel
- 66: Kunststoffkappe
- 68: U-Profil
- 70: U-Profil

## Patentansprüche

1. Wischarm (10) mit einem auf einer Antriebsachse angeordneten Befestigungsteil (12), das mit einem Gelenkteil (14) gelenkig verbunden ist, an das sich starr eine Wischstange (16) anschließt, die über ein Bügelteil (18) gelenkig mit einem Wischblatt verbunden ist und mit einer Spritzwasservorrichtung (20), die teilweise in der Wischstange (16) integriert ist, dadurch gekennzeichnet, daß die Wischstange (16) im Bereich der Verbindung mit dem Gelenkteil (14) ein Rohrprofil aufweist, durch das eine Wasserleitung (22) führbar ist.

2. Wischarm (10) nach Anspruch 1, dadurch gekennzeichnet, daß die Wasserleitung (22) an der dem Gelenkteil (14) zugewandten Stirnseite (24) der Wischstange (16) zugeführt ist.

3. Wischarm (10) nach einem der vorhergehenden Ansprüche, dadurch gekennzeichnet, daß das Gelenkteil (14) mit der Wischstange (16) verkrimpt ist.

4. Wischarm (10) nach Anspruch 3, dadurch gekennzeichnet, daß die Wischstange (16) und/oder das Gelenkteil im Bereich der Verbindungsstelle mindestens eine Ausnehmung (26, 28, 30, 32) aufweist, in die Material des Gelenkteils (14) bzw. der Wischstange (16) formschlüssig ragt.

5. Wischarm (10) nach einem der vorhergehenden Ansprüche, dadurch gekennzeichnet, daß die Wischstange (16) im Bereich der Verbindung mit dem Bügelteil (18) ein Rohrprofil aufweist.

6. Wischarm (10) nach Anspruch 5, dadurch gekennzeichnet, daß das Bügelteil (18) mit der Wischstange (16) verkrimpt ist.

7. Wischarm (10) nach Anspruch 5 oder 6, dadurch gekennzeichnet, daß an der dem Wischblatt zugewandten Stirnseite (34) der Wischstange (16) ein Kopf (36) mit Spritzdüsen (60, 62) aufgesteckt ist.

8. Wischarm (10) nach einem der vorhergehenden Ansprüche, dadurch gekennzeichnet, daß die Wischstange (16) ein durchgehendes Rohrprofil aufweist und als Leitung für das Spritzwasser dient.

9. Wischarm (10) nach einem der vorhergehenden Ansprüche, dadurch gekennzeichnet, daß eine Zugfeder (52) an einem Querstift (56) am Gelenkteil (14) angreift.
